# EUROPÄISCHE PATENTSCHRIFT

(11) **EP 3 877 159 B1**
(45) Veröffentlichungstag und Bekanntmachung des Hinweises auf die Patenterteilung: **24.05.2023**
(21) Anmeldenummer: 19797592.3
(22) Anmeldetag: 23.10.2019
(51) Int. Cl.: B29C 65/52, B29C 65/78, B29C 65/00, F03D 1/06, B29D 99/00, B05C 5/02, B29C 65/48, B29L 31/08, B05C 7/02, B05C 13/02

(54) **VORRICHTUNG UND VERFAHREN ZUM HERSTELLEN EINES ROTORBLATTES FÜR EINE WINDENERGIEANLAGE SOWIE WINDENERGIEANLAGE**
APPARATUS AND METHOD FOR PRODUCING A ROTOR BLADE FOR A WIND TURBINE, AND WIND TURBINE
DISPOSITIF ET PROCÉDÉ POUR RÉALISER UNE PALE DE ROTOR DESTINÉE À UNE ÉOLIENNE ET ÉOLIENNE CORRESPONDANTE

(30) Priorität: 06.11.2018 DE 102018008698
(43) Veröffentlichungstag der Anmeldung: 15.09.2021
(73) Patentinhaber: Siemens Gamesa Renewable Energy Service GmbH, 20097 Hamburg (DE)
(72) Erfinder: BENDEL, Urs, 24787 Fockbek (DE)
(74) Vertreter: Schlotter, Alexander Carolus Paul
(86) Internationale Anmeldenummer: PCT/EP2019/078826
(87) Internationale Veröffentlichungsnummer: WO 2020/094395

(56) Entgegenhaltungen:
- EP-A1- 2 903 805
- EP-A2- 2 447 521
- EP-A2- 2 447 521
- EP-B1- 2 903 805
- WO-A1-2014/053142
- WO-A2-2010/129492
- WO-A2-2010/129492
- DE-A1-102012 012 298
- DE-A1-102012 012 298
- DE-A1-102012 021 658
- DE-A1-102012 021 658

## Beschreibung

Die Erfindung betrifft eine Vorrichtung und ein Verfahren zum Herstellen eines Rotorblattes für eine Windenergieanlage sowie eine Windenergieanlage.

Rotorblätter für Windenergieanlagen werden häufig aus zwei separat voneinander hergestellten Rotorblattschalen zusammengesetzt. Die beiden Rotorblattschalen werden dabei an jeweils im Bereich der sog. Vorderkante oder Nase und der sog. Hinterkante vorgesehenen Klebeflächen miteinander verklebt. Ferner können im Inneren des Rotorblattes ein oder mehrere Stege vorgesehen sein, über welche die beiden Rotorblattschalen zusätzlich verklebt sind.

Bei der Realisierung der jeweils erforderlichen Verklebung, insbesondere ihrer Breite, spielt die Dosierung der Menge der Klebepaste auf den Flächen, die eine Verklebung zwischen den Blattschalen untereinander bzw. zwischen den Blattschalen und den Stegen herstellen sollen, eine wichtige Rolle. Es ist bekannt, die Menge des aufgetragenen Klebstoffs durch die Geschwindigkeit einzustellen, mit der eine Auftragsdüse von einer Bedienperson manuell über die Klebeflansche geführt wird. Der Klebstoff wird hierbei über eine Pumpeneinheit mit angeschlossener Vorratseinheit zur Verfügung gestellt, die auf einem Anhänger montiert sind und häufig mit einem Gabelstapler an der Rotorblattform entlang bewegt werden. Die Menge des auf diese Weise in jedem einzelnen Querschnitt der Verklebung aufgebrachten Klebstoffs ist jedoch nicht immer sicher reproduzierbar. Ferner ist der Prozess personalintensiv.

DE 10 2012 021 658 A1 offenbart eine Vorrichtung, insbesondere zum Vermessen von Oberflächen von Fügestellen zumindest zweier zu verbindender Fügeteile und vorzugsweise zum Verbinden derselben. DE 10 2012 012 298 A1 offenbart ein Klebeverfahren und eine entsprechende Klebevorrichtung zum Zusammenkleben von Fügeteilen, die an ihren zusammenzufügenden Stirnflächen Klebeflächen aufweisen, insbesondere zum Zusammenkleben von Rotorblatthalbschalen zu einem Rotorblatt für eine Windkraftanlage. EP 2 447 521 A2 offenbart eine Automatisierungsvorrichtung zum Fertigen eines Rotorblatts einer Windenergieanlage. WO 2010/129492 A2 offenbart eine Vorrichtung zum Befüllen einer Form, die zum Formen von Rotorblättern einer Windenergieanlage benutzt wird, wobei die Formen ein Blattwurzelende und ein Blattspitzenende aufweisen. WO 2014/053142 A1 offenbart ein Herstellungssystem für eine Komponente einer Windenergieanlage. Das System weist eine längliche Formenanordnung auf, die sich in einer Längsrichtung erstreckt, wobei die Formenanordnung eine Formfläche aufweist und eine in Längsrichtung veränderliche Breite hat.

Es ist Aufgabe der Erfindung, eine Vorrichtung und ein Verfahren zum verbesserten Herstellen von Rotorblättern sowie eine entsprechende Windenergieanlage anzugeben. Diese Aufgabe wird durch eine Vorrichtung und ein Verfahren zur Herstellung eines Rotorblattes sowie eine Windenergieanlage gemäß den unabhängigen Ansprüchen gelöst. Gemäß einem ersten Aspekt der Erfindung weist eine Vorrichtung zum Herstellen eines mindestens zwei miteinander verklebte Rotorblattschalen aufweisenden Rotorblattes für eine Windenergieanlage auf: eine Halterungseinrichtung, welche dazu eingerichtet ist, eine Rotorblattschale in einer Position zu halten, in welcher mindestens eine an der Ro-torblattschale und/oder an einem an der Rotorblattschale angebrachten Steg vorgesehene Klebefläche freiliegt, an welcher die Rotorblattschale mit einer weiteren Rotorblattschale verklebt werden kann, einen Roboterarm, welcher dazu eingerichtet ist, Klebstoff auf die mindestens eine Klebefläche aufzutragen, ein Fahrgestell, an welchem der Roboterarm angebracht ist, und eine an der Halterungseinrichtung angebrachte Führungseinrichtung, an welcher das Fahrgestell beweglich gelagert ist und welche dazu eingerichtet ist, das Fahrgestell zusammen mit dem daran angebrachten Roboterarm an der Halterungseinrichtung, insbesondere an der Klebefläche, entlang zu führen.

Gemäß einem zweiten Aspekt der Erfindung wird bei einem Verfahren zum Herstellen eines mindestens zwei miteinander verklebte Rotorblattschalen aufweisenden Rotorblattes für eine Windenergieanlage eine Rotorblattschale mittels einer Halterungseinrichtung derart gehalten, dass mindestens eine an der Rotorblattschale und/oder an einem an der Rotorblattschale angebrachten Steg vorgesehene Klebefläche, an welcher die Rotorblattschale mit einer weiteren Rotorblattschale verklebt werden kann, freiliegt, und mittels eines Roboterarms Klebstoff auf die mindestens eine Klebefläche aufgetragen, wobei der Roboterarm an einem Fahrgestell angebracht ist, welches an einer an der Halterungseinrichtung angebrachten Führungseinrichtung beweglich gelagert ist und zusammen mit dem daran angebrachten Roboterarm an der Halterungseinrichtung, insbesondere an der Klebefläche, entlang geführt wird. Anschließend wird die weitere Rotorblattschale mit der mindestens einen mit Klebstoff versehenen Klebefläche der Rotorblattschale in Kontakt gebracht, wodurch die beiden Rotorblattschalen miteinander verklebt werden.

Gemäß einem dritten Aspekt der Erfindung weist eine Windenergieanlage mindestens ein Rotorblatt auf, welches unter Verwendung der Vorrichtung gemäß dem ersten Aspekt der Erfindung und/oder mit dem Verfahren gemäß dem zweiten Aspekt der Erfindung hergestellt wurde.

Bevorzugte Aspekte der Erfindung basieren auf dem Ansatz, den Klebstoff mit Hilfe eines an einer Halteeinrichtung, welche die Rotorblattschale in einer geeigneten Position hält, beweglich gelagerten und verfahrbaren Roboterarms auf die Klebeflächen der Rotorblattschale aufzubringen. Der Roboterarm, welcher auch als Manipulator bezeichnet wird, ist vorzugsweise Teil eines sog. Industrieroboters, der eine programmierbare Maschine zur Handhabung und/oder Montage und/oder Bearbeitung von Werkstücken darstellt und insbesondere den Manipulator (Roboterarm), eine Steuerung und einen Effektor (z.B. eine Düse, ein Werkzeug, einen Greifer etc.) aufweist. Im Zusammenhang mit der vorliegenden Erfindung werden die Begriffe Roboterarm, Manipulator und Industrieroboter synonym verwendet. Vorzugsweise weist der Roboterarm bzw. Industrieroboter ferner einen oder mehrere verschiedene Sensoren auf, anhand welcher die jeweils durchgeführten Aktionen des Roboterarms und/oder Effektors erfasst, gesteuert bzw. geregelt werden können. Vorzugsweise ist der Roboterarm so programmierbar, dass der in der Lage ist, die Auftragung von Klebstoff auf die Klebeflächen autonom durchzuführen und/oder abhängig von Sensorinformationen in Grenzen zu variieren.

Durch die Erfindung wird die Reproduzierbarkeit der auf die jeweiligen Klebeflächen aufgetragenen Klebstoffmenge deutlich erhöht. Da die Dosierung des aufgetragenen Klebstoffs mit hoher Genauigkeit möglich ist, können gegenüber einem manuellen Auftrag und einer damit verbundenen möglichen Überdosierung von Klebstoff Kosten gespart werden. Das Auftragen des Klebstoffs geht darüber hinaus schneller, da sich der Roboterarm schneller und präziser vorwärts bewegen kann, insbesondere in Längsrichtung der Rotorblattschale und/oder entlang von Klebeflächen bzw. Klebelinien, als etwa ein Mitarbeiter, der die Auftragsdüse manuell nachführt. Ferner sind in der Regel keine oder zumindest weniger Nacharbeiten notwendig, was die erreichbare Zykluszeit für das Auftragen von Klebstoff auf die je Rotorblattschale vorgesehenen Klebeflächen reduziert. Nicht zuletzt können Personalkosten eingespart werden, da die Auftragung des Klebstoffs mit weniger Mitarbeitern durchgeführt werden kann.

Insgesamt wird durch die Erfindung das Herstellen von Rotorblättern verbessert und eine entsprechende Windenergieanlage angegeben.

Vorzugsweise weist die Halterungseinrichtung eine Negativform zum Herstellen der Rotorblattschale auf. Die Rotorblattschale wird vorzugsweise aus einem Faserverbundwerkstoff hergestellt, indem mehrere Lagen dünner, insbesondere 0,5 mm bis 2 mm dünner, textiler Gebilde, wie etwa Gewebe, Gewirke, Gelege oder Vliese, in die Negativform eingelegt und anschließend mittels einer Harzinfusionstechnik mit Harz versehen werden. Alternativ können vorimprägnierte Faserlagen (sog. Prepregs) verwendet werden, bei welchen die Faserlagen bereits in Harz, insbesondere eine Lage aus Harz, eingebettet sind und nach Erwärmung und ggf. Beaufschlagung mit Unterdruck eine stoffschlüssige Verbindung eingehen. In beiden Fällen nimmt der Faserverbundwerkstoff eine Oberfläche entsprechend der Negativform an. Ein "Umbetten" der in der Negativform hergestellten Rotorblattschale etwa in eine für den Klebstoffauftrag vorgesehene separate Halterung kann dadurch entfallen.

Alternativ oder zusätzlich ist die Rotorblattschale in der Halterungseinrichtung so positionierbar bzw. positioniert, dass die mindestens eine an einer Vorder- und/oder Hinterkante der Rotorblattschale und/oder an einem an der Rotorblattschale angebrachten Steg vorgesehene Klebefläche freiliegt, d.h. dass die mindestens eine Klebefläche zumindest von einer Seite, insbesondere von oben, her für den Roboterarm, insbesondere eine am Roboterarm vorgesehene Düse zum Auftragen des Klebstoffs, zugänglich ist. Dadurch wird eine besonders günstige Positionierung der Rotorblattschale, insbesondere der Klebeflächen, gewährleistet, was den Klebstoffauftrag besonders einfach, schnell und gut reproduzierbar macht.

Vorzugsweise weist die Halterungseinrichtung einen oberen Bereich, in welchem insbesondere die Negativform vorgesehen ist, einen Bodenbereich und zwei Seitenbereiche auf, wobei die Führungseinrichtung an einem der Seitenbereiche der Halterungseinrichtung angebracht ist. Vorzugsweise weist die Führungseinrichtung eine oder mehrere Führungsschienen auf, welche insbesondere in Längsrichtung der Negativform bzw. Rotorblattschale verlaufen. Dadurch wird eine platzsparende, robuste und spielfreie oder zumindest spielarme Lagerung des Fahrgestells bzw. des daran angebrachten Roboterarms an der Halteeinrichtung ermöglicht.

Vorzugsweise weist der der Roboterarm mindestens zwei rotatorische Achsen und/oder mindestens zwei Drehgelenke auf. Alternativ oder zusätzlich kann der Roboterarm mindestens eine translatorische Achse und/oder mindestens ein Schubgelenk aufweisen. Vorzugsweise weist der Roboterarm eine Reihe von starren Gliedern auf, die miteinander durch Dreh- und/oder Schubgelenke verbunden sind, wobei die Gelenke durch gesteuerte Antriebe verstellt werden können. Ein Ende dieser Reihe von Gliedern ist vorzugsweise am Fahrgestell angebracht, während das andere Ende frei beweglich ist und mit einem Werkzeug, insbesondere einer Düse, bestückt ist. Dadurch lässt sich eine für einen besonders gut reproduzierbaren Klebstoffauftrag gute Beweglichkeit des Roboterarms erreichen.

Es ist ferner bevorzugt, dass der Roboterarm und/oder das Fahrgestell und/oder die Führungseinrichtung dazu eingerichtet ist bzw. sind, ein freies Ende des Roboterarms an der Klebefläche, welche sich insbesondere an einer Vorder- und/oder Hinterkante der Rotorblattschale befindet, entlang zu führen und/oder zur Klebefläche, welche sich insbesondere am einem an der Rotorblattschale angebrachten Steg befindet, hin zu führen. Vorzugsweise ist die Anzahl und/oder Länge der einzelnen Glieder und/oder der Anzahl und/oder Reihenfolge der Drehgelenke und/oder Schubgelenke so gewählt, dass das freie Ende des Roboterarms die betreffende(n) Klebefläche(n) entlang der Vorder- und/oder Hinterkante bzw. am Steg erreichen kann.

Vorzugsweise ist am freien Ende des Roboterarms eine Düse vorgesehen, welche dazu eingerichtet ist, Klebstoff auf die Klebefläche aufzutragen. Vorzugsweise ist die Düse am Roboterarm beweglich gelagert. Dadurch ist es möglich, die Düse beim Auftragen des Klebstoffs stets im optimalen Winkel zur Klebefläche auszurichten.

Vorzugsweise ist eine Zuführungseinrichtung vorgesehen, welche dazu eingerichtet ist, der Düse Klebstoff zuzuführen. Vorzugsweise ist eine Ventileinrichtung vorgesehen, welche dazu eingerichtet ist, die Menge des von der Düse auf die Klebefläche aufgetragenen und/oder des der Düse zugeführten Klebstoffes zu steuern. Beispielsweise wird die Menge des aufgetragenen bzw. zugeführten Klebstoffes durch Einstellen der Größe einer Ventilöffnung der Ventileinrichtung gesteuert, insbesondere durch Öffnen bzw. Schließen der Ventilöffnung.

Vorzugsweise ist eine Antriebseinrichtung vorgesehen, welche dazu eingerichtet ist, einen Vorschub des Fahrgestells entlang der Halterungseinrichtung, insbesondere entlang der Klebefläche, zu bewirken. Durch Einstellen der Vorschubgeschwindigkeit des Fahrgestells und des daran angebrachten Roboterarms kann, alternativ oder zusätzlich zum Einstellen der Ventilöffnung, ebenfalls die Menge des aufgetragenen bzw. zugeführten Klebstoffes gesteuert werden.

Bei einer weiteren bevorzugten Ausgestaltung ist eine Steuerungseinrichtung vorgesehen, welche dazu eingerichtet ist, die Ventileinrichtung und/oder Antriebseinrichtung in Abhängigkeit vom Typ des herzustellenden Rotorblattes und/oder von der aktuellen Position des Fahrgestells in Längsrichtung (z-Richtung) des Rotorblattes und/oder von der Art der aktuell mit Klebstoff zu versehenden Klebefläche und/ oder von der Lage der aktuell mit Klebstoff zu versehenden Klebefläche im Raum zu steuern. Bei der jeweils aktuell mit Klebstoff zu versehenden Klebefläche bzw. Klebelinie handelt es sich z.B. um die Vorderkante und/oder Hinterkante der Rotorblattschale und/oder die Verklebefläche des mindestens einen Stegs. Durch Einstellen der Größe der Ventilöffnung der Ventileinrichtung und/oder der von der Vorschubeinrichtung erzeugten Vorschubgeschwindigkeit kann die pro Zeiteinheit auf eine Klebefläche aufgetragene Menge an Klebstoff besonders zuverlässig und reproduzierbar eingestellt werden.

Weitere Vorteile, Merkmale und Anwendungsmöglichkeiten der vorliegenden Erfindung ergeben sich aus der nachfolgenden Beschreibung in Zusammenhang mit den Figuren.

Es zeigen:
- Fig. 1: ein Beispiel einer Vorrichtung beim Auftragen von Klebstoff auf eine erste Klebefläche;
- Fig. 2: ein Beispiel einer Vorrichtung beim Auftragen von Klebstoff auf eine zweite Klebefläche;
- Fig. 3: ein Beispiel einer Vorrichtung beim Auftragen von Klebstoff auf eine dritte Klebefläche; und
- Fig. 4: ein Beispiel einer Vorrichtung beim Auftragen von Klebstoff auf eine vierte Klebefläche.

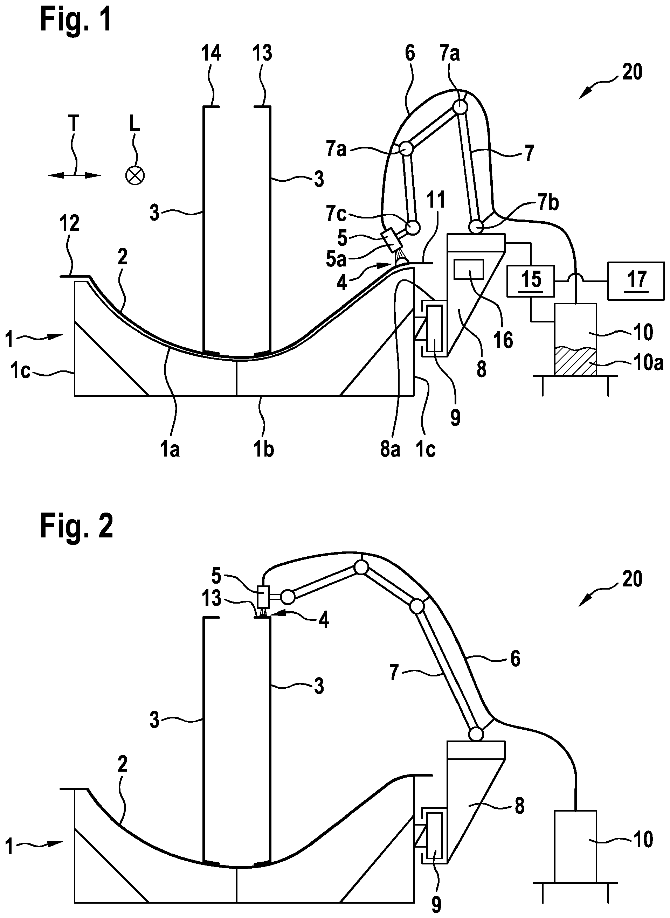

Figur 1 zeigt eine stark vereinfachte Querschnittsdarstellung eines Beispiels einer Vorrichtung 20 beim Auftragen von Klebstoff 4 auf eine erste Klebefläche 11. Die Vorrichtung 20 weist eine Halterungseinrichtung 1 auf, an deren Oberseite sich eine für die Herstellung einer Rotorblattschale 2 vorgesehene Negativform 1a befindet.

Zur Herstellung der Rotorblattschale 2 werden vorzugsweise mehrere Lagen dünner textiler Gebilde, wie etwa Gewebe, Gewirke, Gelege oder Vliese, in die Negativform 1a eingelegt und anschließend mittels einer Harzinfusionstechnik mit Harz versehen. Alternativ werden vorimprägnierte Faserlagen (sog. Prepregs), die bereits in Harz, insbesondere eine Lage aus Harz, eingebettet sind, in die Negativform 1a eingelegt. Diese gehen nach Erwärmung und ggf. Beaufschlagung mit Unterdruck eine stoffschlüssige Verbindung ein. In beiden Fällen nimmt der jeweils erhaltene Faserverbundwerkstoff eine Oberfläche entsprechend der Negativform 1a an.

Die Rotorblattschale 2 wird in der Halterungseinrichtung 1 so gehalten bzw. positioniert, dass Klebeflächen 11, 12 freiliegen, an welchen die Rotorblattschale 2 mit einer entsprechend gestalteten zweiten Rotorblattschale (nicht dargestellt) verklebt werden kann. Die Klebeflächen 11, 12 befinden sich vorzugsweise an einer Vorder- und/oder Hinterkante der Rotorblattschale 2. Handelt es sich bei der dargestellten Rotorblattschale 2 z.B. um eine druckseitige Rotorblattschale eines Rotorblattes, so wird diese mit einer saugseitigen Rotorblattschale des Rotorblattes verklebt und umgekehrt.

Im vorliegenden Beispiel sind an der Innenseite der Rotorblattschale 2 zwei Stege 3 angebracht, an deren freien Enden ebenfalls Klebeflächen 13, 14 vorgesehen sind, an welchen die Rotorblattschale 2 - zusätzlich zu den Klebeflächen 11, 12 an der Vorder- bzw. Hinterkante - mit der Innenseite der zweiten Rotorblattschale verklebt werden kann.

Die Halterungseinrichtung 1 weist neben einem Bodenbereich 1b zwei Seitenbereiche 1c auf, die als durchgehende Flächen, z.B. in Form von Seitenwänden, oder aber auch als durchbrochene Bereiche, z.B. in Form von Stützen und/oder Streben, ausgebildet sein können und im Wesentlichen vertikal verlaufen.

An einem der Seitenbereiche 1c ist eine Führungseinrichtung 9 angebracht, die im vorliegenden Beispiel als Schiene mit einem T-förmigen Querschnitt ausgebildet ist. Vorzugsweise kann die Führungseinrichtung 9 mehr als eine Schiene, insbesondere zwei Schienen, aufweisen.

Die, insbesondere als Schiene oder Schienen ausgebildete, Führungseinrichtung 9 verläuft im Wesentlichen parallel zur - im vorliegenden Beispiel senkrecht zur Zeichenebene verlaufenden - Längsrichtung L der Rotorblattschale 2 bzw. Halterungseinrichtung 1.

An der Führungseinrichtung 9 ist ein Fahrgestell 8 gelagert, das in Längsrichtung L verschoben werden kann. Das Fahrgestell 8 weist im vorliegenden Beispiel zwei L-förmige Profile 8a auf, die von oben und unten mit dem T-förmigen Profil der Schiene der Führungseinrichtung 9 in Eingriff stehen.

Am Fahrgestell 8 ist ein Roboterarm 7 angebracht, welcher im vorliegenden Beispiel insgesamt drei einzelne Glieder aufweist, die über Drehgelenke 7a miteinander verbunden sind. Ein Ende des Roboterarms 7 ist, vorzugsweise über ein weiteres Drehgelenk 7b drehbar, am Fahrgestell 8 gelagert. Am anderen, freien Ende des Roboterarms 7 ist eine Düse 5 angebracht, die vorzugsweise über ein weiteres Drehgelenk 7c drehbar am Roboterarm 7 gelagert ist.

Grundsätzlich kann der Roboterarm 7 mehr oder weniger als drei Glieder und/oder mehr oder weniger als die gezeigten Drehgelenke 7a, 7b, 7c aufweisen. Alternativ oder zusätzlich kann der Roboterarm 7 mindestens ein Schubgelenk aufweisen, welches eine translatorische Bewegung bzw. Verlängerung und/oder Verkürzung eines der Glieder des Roboterarms 7 ermöglicht.

An der Düse 5 ist eine Zuführungseinrichtung 6, z.B. in Form eines Hochdruckschlauchs, angeschlossen, durch welche der Düse 5 Klebstoff zugeführt werden kann. Die Zuführungseinrichtung 6 ist im vorliegenden Beispiel mit einem Klebstoffvorratsbehälter 10 verbunden, in welchem sich Klebstoff 10a, z.B. Kunstharz und Härter, befindet und welcher vorzugsweise als verfahrbarer Wagen ausgebildet ist. Ferner ist vorzugsweise eine Hochdruckpumpe vorgesehen, durch welche der Klebstoff 10a mit Hochdruck durch die Zuführungseinrichtung 6 zur Düse 5 befördert wird.

An und/oder in der Düse 5 ist eine Ventileinrichtung 5a vorgesehen, durch welche gesteuert werden kann, wieviel Klebstoff 4 über die Düse 5 auf eine Klebefläche 11 aufgetragen wird.

Ferner ist eine Antriebseinrichtung 16 vorgesehen, welche im vorliegenden Beispiel in das Fahrgestell 8 integriert ist und dazu eingerichtet ist, eine Vorschubbewegung des Fahrgestells 8 an der Führungseinrichtung 9 entlang zu bewirken. Alternativ kann die Antriebseinrichtung 16 auch außerhalb des Fahrgestells 8 angeordnet sein, beispielsweise an der Führungseinrichtung 9.

Darüber hinaus ist eine Steuerungseinrichtung 15 vorgesehen, welche dazu eingerichtet ist, die Vorschubbewegung des Fahrgestells 8 und/oder den Roboterarm 7 und/oder das Ventil 5 bzw. die Ventileinrichtung 5a und/oder die Hochdruckpumpe bzw. den Hochdruck zur Beförderung des Klebstoffs 10a zur Düse 5 zu steuern. Eine oder mehrere der vorstehend genannten Komponenten der Vorrichtung 20 werden dabei vorzugsweise so gesteuert bzw. geregelt, dass eine für die jeweilige Klebefläche 11 bis 14 gewünschte bzw. vorgegebene Menge an Klebstoff 4 auf die jeweilige Klebefläche 11 bis 14 aufgetragen wird. Vorzugsweise wird die Menge des jeweils aufgetragenen Klebstoffs 4 durch Steuern der Größe einer Öffnung der Ventileinrichtung 5a an der Düse 5 und/oder durch Steuern der Vorschubgeschwindigkeit des Fahrgestells 8 eingestellt. Alternativ oder zusätzlich kann die Menge des aufgetragenen Klebstoffs 4 durch Steuern der Bewegung des Roboterarms 7 und der daran angebrachten Düse 5 in Richtung T der Profiltiefe der Rotorblattschale 2 an die gewünschte Breite der Verklebung angepasst werden.

Vorzugsweise ist im Sinne der vorliegenden Erfindung unter dem Begriff "Menge des Klebstoffs" oder "Klebstoffmenge" ein auf die Flächeneinheit der jeweiligen Klebefläche 11 bis 14 bezogenes Volumen und/oder Gewicht des aufgebrachten Klebstoffs 4 zu verstehen, also z.B. Milliliter pro Quadratzentimeter oder Gramm pro Quadratzentimeter. Alternativ oder zusätzlich kann sich der Begriff "Menge" bzw. "Klebstoffmenge" aber auch auf die pro Zeiteinheit, insbesondere während der Vorschubbewegung des Fahrgestells 8, aufgetragene Menge an Klebstoff 4 beziehen, also z.B. Milliliter pro Sekunde, Gramm pro Sekunde, Milliliter pro Sekunde und Quadratzentimeter oder Gramm pro Sekunde und Quadratzentimeter. Alternativ oder zusätzlich kann sich "Menge" oder "Klebstoffmenge" aber auch auf die laterale Ausdehnung und/oder Höhe des jeweils aufgebrachten Klebstoffs 4 beziehen, also z.B. auf die Breite einer auf eine Klebefläche 11 bis 14 aufgetragenen Klebstoffschicht in Richtung T der Profiltiefe der Rotorblattschale 2 und/oder die Höhe der Klebstoffschicht.

Vorzugsweise ist die Steuerungseinrichtung 15 dazu eingerichtet, die jeweils aufzutragende Klebstoffmenge anhand von Parametern zu ermitteln und insbesondere die Öffnung der Ventileinrichtung 5a entsprechend zu steuern. Bei den Parametern handelt es sich vorzugsweise um den jeweiligen Rotorblatttyp, die jeweils aktuelle z-Position des Roboterarms 7 bzw. des Fahrgestells 8 in Längsrichtung L der Rotorblattschale 2 und/oder den Typ der jeweils mit Klebstoff 4 zu versehenden Klebefläche 11 bis 14, wie z.B. Vorderkante 11, Hinterkante 12, Verklebefläche 13 an dem der Vorderkante 11 zugewandten Steg 3, Verklebefläche 14 an dem Hinterkante 12 zugewandten Steg 3 und/oder die absolute Lage der Verklebeflächen, insbesondere der Verklebeflächen 13, 14 der Stege 3, im Raum etc. Die genannten Parameter können durch einen Bedienperson vorgegeben und/oder aber auch automatisch, z.B. sensorisch, erfasst und in einem Speicher oder Zwischenspeicher 17 gespeichert werden, auf welchen die Steuerungseinrichtung 15 zugreifen kann.

Vorzugsweise wird, etwa mittels eines oder mehrerer Sensoren, erfasst, wenn sich das Fahrgestell 8 und/oder der Roboterarm 7 in einer Ausgangsposition befindet bzw. befinden. Die Ausgangsposition kann z.B. an einem Ende der Rotorblattschale 2, z.B. an der Blattwurzel oder Blattspitze, liegen. Wird im Weiteren die Bewegung des Fahrgestells 8 und/oder Roboterarms 7, insbesondere der daran befindlichen Düse 5, sensorisch erfasst, kann daraus die genaue Position des Fahrgestells 8 bzw. Roboterarms 7 relativ zur Ausgangsposition (die sozusagen einen "Nullpunkt" bildet) und damit auch relativ zur Rotorblattschale 2 ermittelt werden. Dementsprechend genau kann anhand der ermittelten Position der ggf. von der z-Position in Längsrichtung L und/oder der Position in Richtung Profiltiefe T abhängige Klebstoffauftrag gesteuert werden.

Es ist optional vorgesehen, dass die Vorrichtung 20 über Sensoren verfügt, die es ermöglichen, die Lage der Verklebeflächen 11 bis 14 im Raum zu ermitteln und mit einer vorher abgespeicherten Soll-Lage zu vergleichen. Entsprechend diesem Abgleich kann dann die aufzutragende Klebstoffmenge gegenüber der vorher festgelegten Nenn-Klebstoffmenge angepasst werden. Es kann mehr Klebstoff aufgetragen werden, wenn ein größerer Klebespalt zwischen der analysierten Klebefläche und der zweiten Rotorblattschale berechnet wurde, und entsprechend kann weniger Klebstoff aufgetragen werden, wenn ein kleiner Spalt berechnet wurde. Die Vorrichtung kann auf Basis dieser Analyse auch eine Warnung erzeugen, wenn der berechnete Klebespalt festgelegte Grenzwerte über- oder unterschreitet.

Bei dem in Fig. 1 gezeigten Beispiel erfolgt der Klebstoffauftrag im Bereich einer dem Roboterarm 7 zugewandten Klebelinie bzw. Klebefläche 11 entlang einer Vorderkante der Rotorblattschale 2. Die Vorrichtung 20, insbesondere der Roboterarm 7, ist vorzugsweise so ausgelegt und/oder gesteuert, dass auch auf andere Klebelinien bzw. Klebeflächen 12 bis 14 in der vorstehend beschriebenen Weise Klebstoff 4 aufgebracht werden kann. Dies wie nachfolgend beispielhaft beschrieben.

Bei dem in Fig. 2 gezeigten Beispiel erfolgt der Klebstoffauftrag auf der dem Roboterarm 7 zugewandten Klebelinie bzw. Klebefläche 13 entlang dem Vorderkantensteg 13 des Rotorblattes.

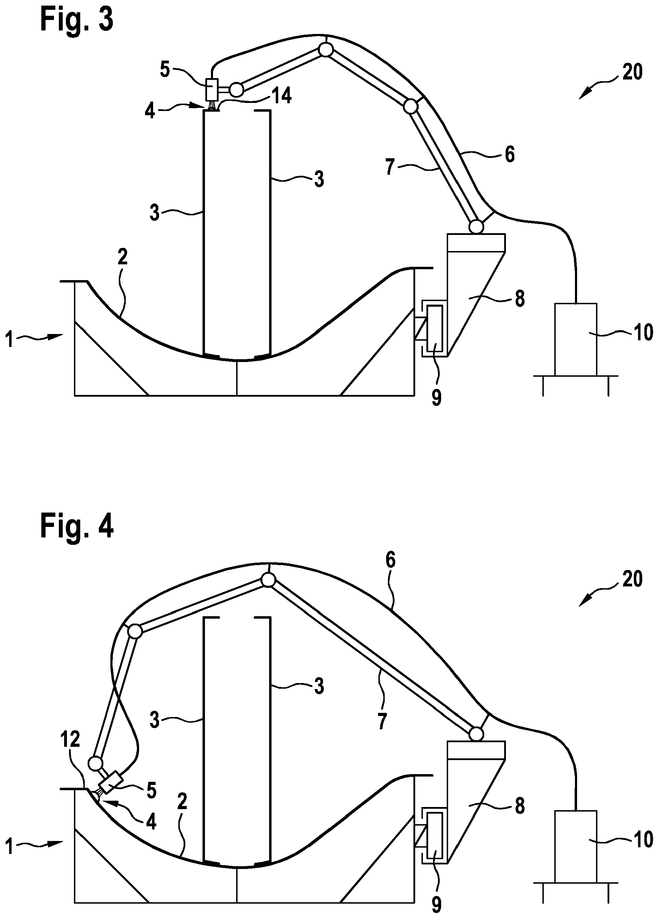

Bei dem in Fig. 3 gezeigten Beispiel erfolgt der Klebstoffauftrag auf der dem Roboterarm 7 abgewandten Klebelinie bzw. Klebefläche 14 entlang dem Hinterkantensteg 14 des Rotorblattes.

Bei dem in Fig. 4 gezeigten Beispiel erfolgt der Kleberauftrag im Bereich einer dem Roboterarm 7 abgewandten Klebelinie bzw. Klebefläche 12 entlang einer Hinterkante 12 der Rotorblattschale 2.

Hinsichtlich des Aufbaus und der Funktionsweise der Vorrichtung 20 gelten die vorstehenden Ausführungen im Zusammenhang mit Fig. 1 auch für die in den Fig. 2 bis 4 gezeigten Beispiele entsprechend.

## Patentansprüche

1. Vorrichtung (20) zum Herstellen eines Rotorblattes für eine Windenergieanlage, wobei das Rotorblatt mindestens zwei miteinander verklebte Rotorblattschalen aufweist, mit
- einer Halterungseinrichtung (1), welche dazu eingerichtet ist, eine Rotorblattschale (2) in einer Position zu halten, in welcher mindestens eine an der Rotorblattschale (2) und/oder an einem an der Rotorblattschale (2) angebrachten Steg (3) vorgesehene Klebefläche (11-14) freiliegt, an welcher die Rotorblattschale (2) mit einer weiteren Rotorblattschale verklebt werden kann,
- einem Roboterarm (7), welcher dazu eingerichtet ist, Klebstoff (4) auf die mindestens eine Klebefläche (11-14) aufzutragen,
- einem Fahrgestell (8), an welchem der Roboterarm (7) angebracht ist, und
- einer an der Halterungseinrichtung (1) angebrachten Führungseinrichtung (9), an welcher das Fahrgestell (8) beweglich gelagert ist und welche dazu eingerichtet ist, das Fahrgestell (8) zusammen mit dem daran angebrachten Roboterarm (7) an der Halterungseinrichtung (1), insbesondere an der Klebefläche (11-14), entlang zu führen,
wobei die Halterungseinrichtung (1) einen oberen Bereich, einen Bodenbereich (1b) und zwei Seitenbereiche (1c) aufweist, **dadurch gekennzeichnet, dass** die Führungseinrichtung (9) an einem der Seitenbereiche (1c) der Halterungseinrichtung (1) angebracht ist.

2. Vorrichtung (20) nach Anspruch 1, wobei die Halterungseinrichtung (1) eine Negativform (1a) zum Herstellen der Rotorblattschale (2) aufweist.

3. Vorrichtung (20) nach Anspruch 2, wobei die Negativform (1a) in dem oberen Bereich vorgesehen ist.

4. Vorrichtung (20) nach einem der vorangehenden Ansprüche, wobei der Roboterarm (7) mindestens zwei rotatorische Achsen (7a, 7b, 7c) und/oder mindestens eine translatorische Achse aufweist.

5. Vorrichtung (20) nach einem der vorangehenden Ansprüche, wobei der Roboterarm (7) und/oder das Fahrgestell (8) und/oder die Führungseinrichtung (9) dazu eingerichtet ist bzw. sind, ein freies Ende des Roboterarms (7) an der Klebefläche (11, 12), welche sich insbesondere an einer Vorder- und/oder Hinterkante der Rotorblattschale (2) befindet, entlang zu führen und/oder zur Klebefläche (13, 14), welche sich insbesondere am einem an der Rotorblattschale (2) angebrachten Steg (3) befindet, hin zu führen.

6. Vorrichtung (20) nach Anspruch 5 mit einer am freien Ende des Roboterarms (7) vorgesehenen Düse (5), welche dazu eingerichtet ist, Klebstoff (4) auf die Klebefläche (11-14) aufzutragen.

7. Vorrichtung (20) nach Anspruch 6, wobei die Düse (5) am Roboterarm (7) beweglich gelagert ist.

8. Vorrichtung (20) nach Anspruch 6 oder 7 mit einer Zuführungseinrichtung (6), welche dazu eingerichtet ist, der Düse (5) Klebstoff (10a) zuzuführen.

9. Vorrichtung (20) nach einem der Ansprüche 6 bis 8 mit einer Ventileinrichtung (5a), welche dazu eingerichtet ist, die Menge des von der Düse (5) auf die Klebefläche (11-14) aufgetragenen und/oder des der Düse (5) zugeführten Klebstoffes (10a) zu steuern.

10. Vorrichtung (20) nach einem der vorangehenden Ansprüche mit einer Antriebseinrichtung (16), welche dazu eingerichtet ist, einen Vorschub des Fahrgestells (8) entlang der Halterungseinrichtung (1), insbesondere entlang der Klebefläche (11-14), zu bewirken.

11. Vorrichtung (20) nach Anspruch 8 und/oder 9 mit einer Steuerungseinrichtung (15), welche dazu eingerichtet ist, die Ventileinrichtung (5a) und/oder Antriebseinrichtung (16) in Abhängigkeit vom Typ des herzustellenden Rotorblattes und/oder von der aktuellen Position des Fahrgestells (8) in Längsrichtung (L) der Rotorblattschale (2) und/oder von der Art der aktuell mit Klebstoff (4) zu versehenden Klebefläche (11-14) und/ oder von der Lage der aktuell mit Klebstoff (4) zu versehenden Klebefläche (11-14) im Raum zu steuern.

12. Verfahren zum Herstellen eines Rotorblattes, welches mindestens zwei miteinander verklebte Rotorblattschalen aufweist, für eine Windenergieanlage, wobei
- eine Rotorblattschale (2) mittels einer Halterungseinrichtung (1) derart gehalten wird, dass mindestens eine an der Rotorblattschale (2) und/oder an einem an der Rotorblattschale (2) angebrachten Steg (3) vorgesehene Klebefläche (11-14), an welcher die Rotorblattschale (2) mit einer weiteren Rotorblattschale verklebt werden kann, freiliegt,
- mittels eines Roboterarms (7) Klebstoff (4) auf die mindestens eine Klebefläche (11-14) aufgetragen wird, wobei der Roboterarm (7) an einem Fahrgestell (7) angebracht ist, welches an einer an der Halterungseinrichtung (1) angebrachten Führungseinrichtung (9) beweglich gelagert ist und zusammen mit dem daran angebrachten Roboterarm (7) an der Halterungseinrichtung (1), insbesondere an der Klebefläche (11-14), entlang geführt wird, und
- die weitere Rotorblattschale mit der mindestens einen mit Klebstoff (4) versehenen Klebefläche (11-14) der Rotorblattschale (2) in Kontakt gebracht wird, wodurch die beiden Rotorblattschalen miteinander verklebt werden,
wobei die Halterungseinrichtung (1) einen oberen Bereich, einen Bodenbereich (1b) und zwei Seitenbereiche (1c) aufweist, **dadurch gekennzeichnet, dass** die Führungseinrichtung (9) an einem der Seitenbereiche (1c) der Halterungseinrichtung (1) angebracht ist.

13. Verfahren nach Anspruch 12, wobei die Halterungseinrichtung (1) eine Negativform (1a) zum Herstellen der Rotorblattschale (2) aufweist.

14. Verfahren nach Anspruch 13, wobei die Negativform (1a) in dem oberen Bereich vorgesehen ist.

15. Windenergieanlage mit mindestens einem Rotorblatt, welches unter Verwendung der Vorrichtung (20) nach einem der Ansprüche 1 bis 11 und/oder mit dem Verfahren nach einem der Ansprüche 12 bis 14 hergestellt wurde.

## Claims

1. A device (20) for manufacturing a rotor blade for a wind energy installation, wherein the rotor blade comprises at least two rotor blade shells which are bonded to one another, wherein the device (20) comprises:
- a holding device (1) which is arranged to hold a rotor blade shell (2) in a position in which at least one bonding surface (11 - 14) which is provided on the rotor blade shell (2) and / or on a web (3) which is attached to the rotor blade shell (2) is exposed, at which bonding surface (11 - 14) the rotor blade shell (2) can be bonded to a further rotor blade shell,
- a robot arm (7) which is arranged to apply adhesive (4) to the at least one bonding surface (11 - 14),
- a carriage (8) on which the robot arm (7) is mounted, and
- a guide device (9) which is mounted on the holding device (1), on which guide device (9) the carriage (8) is mounted so as to be movable, and which guide device (9) is arranged to guide the carriage (8), together with the robot arm (7) mounted thereon, along the holding device (1), in particular along the bonding surface (11 - 14) wherein the holding device (1) has an upper region, a lower region (1b) and two lateral regions (1c), **characterised in that** the guide device (9) is attached to one of the lateral regions (1c) of the holding device (1).

2. The device (20) according to claim 1, wherein the holding device (1) comprises a negative mould (1a) for manufacturing the rotor blade shell (2).

3. The device (20) according to claim 2, wherein the negative mould (1a) is provided in the upper region.

4. The device (20) according to any one of the preceding claims, wherein the robot arm (7) has at least two rotational axes (7a, 7b, 7c) and / or at least one translational axis.

5. The device (20) according to any one of the preceding claims, wherein the robot arm (7) and / or the carriage (8) and / or the guide device (9) is / are arranged to guide a free end of the robot arm (7) along the bonding surface (11, 12), which is located in particular on a leading edge and / or a rear edge of the rotor blade shell (2), and / or towards the bonding surface (13, 14), which is located in particular on a web (3) which is attached to the rotor blade shell (2).

6. The device (20) according to claim 5, comprising a nozzle (5) provided at the free end of the robot arm (7), which nozzle (5) is arranged to apply adhesive (4) to the bonding surface (11 - 14).

7. The device (20) according to claim 6, wherein the nozzle (5) is mounted on the robot arm (7) so as to be movable.

8. The device (20) according to claim 6 or 7, comprising a feeding device (6) which is arranged to feed adhesive (10a) to the nozzle (5).

9. The device (20) according to any one of the claims 6 to 8, comprising a valve device (5a) which is arranged to control the amount of adhesive (10a) which is applied to the bonding surface (11 - 14) by the nozzle (5) and / or the amount of adhesive (10a) which is supplied to the nozzle (5).

10. The device (20) according to any one of the preceding claims, comprising a drive device (16) which is arranged to bring about an advance of the carriage (8) along the holding device (1), in particular along the bonding surface (11 - 14).

11. The device (20) according to claim 8 and / or 9, comprising a control device (15) which is arranged to control the valve device (5a) and / or the drive device (16) as a function of the type of rotor blade to be manufactured, and / or as a function of the current position of the carriage (8) in the longitudinal direction (L) of the rotor blade shell (2) and / or as a function of the type of bonding surface (11 - 14) currently to be provided with adhesive (4) and / or as a function of the position in space of the bonding surface (11 - 14) currently to be provided with adhesive (4).

12. A method of manufacturing a rotor blade for a wind energy installation, wherein the rotor blade comprises at least two rotor blade shells which are bonded to one another, wherein
- a rotor blade shell (2) is held by means of a holding device (1) in such a way that at least one bonding surface (11 - 14) which is provided on the rotor blade shell (2) and / or on a web (3) which is attached to the rotor blade shell (2), on which bonding surface (11 - 14) the rotor blade shell (2) can be bonded to a further rotor blade shell, is exposed,
- adhesive (4) is applied to the at least one bonding surface (11 - 14) by means of a robot arm (7), wherein the robot arm (7) is attached to a carriage (7) which is mounted so as to be movable along a guide device (9) attached to the holding device (1), and which carriage is guided, together with the robot arm (7) attached thereto, along the holding device (1), in particular along the bonding surface (11 - 14), and
- the further rotor blade shell is brought into contact with the at least one bonding surface (11 - 14) of the rotor blade shell (2) provided with adhesive, as a result of which the two rotor blade shells are bonded to one another,
wherein the holding device (1) has an upper region, a lower region (1b) and two lateral regions (1c), **characterised in that** the guide device (9) is attached to one of the lateral regions (1c) of the holding device (1).

13. The method according to claim 12, wherein the holding device (1) comprises a negative mould (1a) for manufacturing the rotor blade shell (2).

14. The method according to claim 13, wherein the negative mould (1a) is provided in the upper region.

15. A wind energy installation comprising at least one rotor blade which has been manufactured using the device (20) according to any one of the claims 1 to 11 and / or using the method according to any one of the claims 12 to 14.

## Revendications

1. Dispositif (20) de fabrication d'une pale de rotor pour une éolienne, dans lequel la pale de rotor présente au moins deux coques de pale de rotor collées l'une à l'autre, avec
- un système de maintien (1) qui est mis au point pour maintenir une coque de pale de rotor (2) dans une position, dans laquelle au moins une face adhésive (11 - 14) prévue sur la coque de pale de rotor (2) et/ou sur une entretoise (3) installée sur la coque de pale de rotor (2) est à découvert, sur laquelle la coque de pale de rotor (2) peut être collée à une autre coque de pale de rotor,
- un bras robotisé (7), qui est mis au point pour appliquer de la colle (4) sur l'au moins une surface adhésive (11 - 14),
- un châssis (8), sur lequel le bras robotisé (7) est installé, et
- un système de guidage (9) installé sur le système de maintien (1), sur lequel le châssis (8) est monté de manière mobile et lequel est mis au point pour guider le long du système de maintien (1), en particulier le long de la surface adhésive (11 - 14), le châssis (8) conjointement avec le bras robotisé (7) installé sur celui-ci,
dans lequel le système de maintien (1) présente une zone supérieure, une zone de fond (1b) et deux zones latérales (1c), **caractérisé en ce que** le système de guidage (9) est installé sur une des zones latérales (1c) du système de maintien (1).

2. Dispositif (20) selon la revendication 1, dans lequel le système de maintien (1) présente un moule négatif (1a) pour fabriquer la coque de pale de rotor (2).

3. Dispositif (20) selon la revendication 2, dans lequel le moule négatif (1a) est prévu dans la zone supérieure

4. Dispositif (20) selon l'une quelconque des revendications précédentes, dans lequel le bras robotisé (7) présente au moins deux axes rotatifs (7a, 7b, 7c) et/ou au moins un axe de translation.

5. Dispositif (20) selon l'une quelconque des revendications précédentes, dans lequel le bras robotisé (7) et/ou le châssis (8) et/ou le système de guidage (9) sont mis au point pour guider le long de la surface adhésive (11, 12), laquelle se trouve en particulier sur une arête avant et/ou arrière de la coque de pale de rotor (2), une extrémité libre du bras robotisé (7) et/ou pour la guider en direction de la surface adhésive (13, 14), laquelle se trouve en particulier sur une entretoise (3) installée sur la coque de pale de rotor (2).

6. Dispositif (20) selon la revendication 5 avec une buse (5) prévue sur l'extrémité libre du bras robotisé (7), laquelle est mise au point pour appliquer de la colle (4) sur la surface adhésive (11 - 14).

7. Dispositif (20) selon la revendication 6, dans lequel la buse (5) est montée de manière mobile sur le bras robotisé (7).

8. Dispositif (20) selon la revendication 6 ou 7 avec un système d'amenée (6), lequel est mis au point pour amener de la colle (10a) à la buse (5).

9. Dispositif (20) selon l'une quelconque des revendications 6 à 8 avec un système de soupape (5a), lequel est mis au point pour commander la quantité de colle (10a) appliquée par la buse (5) sur la surface adhésive (11 - 14) et/ou amenée à la buse (5).

10. Dispositif (20) selon l'une quelconque des revendications précédentes avec un système d'entraînement (16), lequel est mis au point pour entraîner un avancement du châssis (8) le long du système de maintien (1), en particulier le long de la surface adhésive (11 - 14).

11. Dispositif (20) selon la revendication 8 et/ou 9 avec un système de commande (15), lequel est mis au point pour commander dans l'espace le système de soupape (5a) et/ou le système d'entraînement (16) en fonction du type de la pale de rotor à fabriquer et/ou de la position instantanée du châssis (8) dans la direction longitudinale (L) de la coque de pale de rotor (2) et/ou du type de la surface adhésive (11 - 14) à doter de colle (4) et/ou de la position de la surface adhésive (11 - 14) à doter instantanément de colle (4).

12. Procédé de fabrication d'une pale de rotor, laquelle présente au moins deux coques de pale de rotor collées l'une à l'autre, pour une éolienne, dans lequel
- une coque de pale de rotor (2) est maintenue de telle manière au moyen d'un système de maintien (1) qu'au moins une surface adhésive (11 -14) prévue sur la coque de pale de rotor (2) et/ou sur une entretoise (3) installée sur la coque de pale de rotor (2), sur laquelle la coque de pale de rotor (2) peut être collée à une autre coque de pale de rotor, est à découvert,
- de la colle (4) est appliquée sur l'au moins une surface adhésive (11 - 14) au moyen du bras robotisé (7), dans lequel le bras robotisé (7) est installé sur un châssis (7), lequel est monté de manière mobile sur un système de guidage (9) installé sur le système de maintien (1) et est guidé le long du système de maintien (1), en particulier le long de la surface adhésive (11 - 14) conjointement avec le bras robotisé (7) installé dessus, et
- l'autre coque de pale de rotor est amenée en contact avec l'au moins une surface adhésive (11 - 14), dotée de colle (4), de la coque de pale de rotor (2), ce qui permet de coller les deux coques de pale de rotor l'une à l'autre,
dans lequel le système de maintien (1) présente une zone supérieure, une zone de fond (1b) et deux zones latérales (1c), **caractérisé en ce que** le système de guidage (9) est installé sur une des zones latérales (1c) du système de maintien (1).

13. Procédé selon la revendication 12, dans lequel le système de maintien (1) présente un moule négatif (1a) pour fabriquer la coque de pale de rotor (2).

14. Procédé selon la revendication 13, dans lequel le moule négatif (1a) est prévu dans la zone supérieure.

15. Eolienne avec au moins une pale de rotor, laquelle a été fabriquée en utilisant le dispositif (20) selon l'une quelconque des revendications 1 à 11 et/ou avec le procédé selon l'une quelconque des revendications 12 à 14.
